# EUROPEAN PATENT APPLICATION

(11) **EP 0 851 713 A2**
(43) Date of publication of application: **01.07.1998**
(21) Application number: 97122811.9
(22) Date of filing: 23.12.1997
(51) Int. Cl.: H05B 33/02

(54) **Light-emitting elements, display unit using light-emitting elements and light-emitting element production method**

(30) Priority: 26.12.1996 JP 347796/96
(71) Applicant: MITSUBISHI DENKI KABUSHIKI KAISHA, Tokyo 100 (JP)
(72) Inventor: Sagane, Yoshifumi, Chiyoda-ku, Tokyo 100 (JP); Nakatsu, Kimihide, Chiyoda-ku, Tokyo 100 (JP); Takeda, Munehisa, Chiyoda-ku, Tokyo 100 (JP); Inubushi, Toshiya, Chiyoda-ku, Tokyo 100 (JP); Satoh, Hideki, Chiyoda-ku, Tokyo 100 (JP); Watanabe, Katsuo, Chiyoda-ku, Tokyo 100 (JP)
(74) Representative: Popp, Eugen, Dr.

(57) **Abstract**

An electroluminescent light (EL) used as a light source for a liquid crystal display element itself vibrates and generates noises, and measures for suppression of noises has been required. A transparent plastic having a specified thickness is closely adhered to a base film constituting the EL to form a layered structure. Vibration generated by the EL is restricted because of rigidity of the transparent plastic sheet adhered thereto, thus generation of noises being suppressed.

## Description

### FIELD OF THE INVENTION

The present invention relates to a light-emitting element and, display unit using the light-emitting element as a light source for a liquid crystal display section of a portable telephone set or the like, as well as to a method of producing the light-emitting elements.

### BACKGROUND OF THE INVENTION

There is provided a display section, on which various types of display such as those concerning an operating state or mode or time are shown, in an electronic device such as a portable telephone set. In almost all electronic devices, a liquid crystal display element is used for this display section, and an electroluminescent light is used as a light-emitting element functioning as a light source for back light.

The electroluminescent light is driven by an AD voltage with illuminance thereof becoming higher as a the frequency is higher, and usually is driven by an AD voltage with a frequency of around 600 Hz, but vibration according to this driving AD voltage is generated, which in turn generates noises. Especially as the liquid crystal display section is provided near a speaker in a portable telephone set, noises generated in association with vibration generated by the electroluminescent light comes into an ear of a user of the portable telephone set, which disturbs smooth communications.

As a solution for solving the problem as described above, it has been proposed to fix the electroluminescent light on a holder having a large mass as disclosed, for instance, in Japanese Patent Laid-Open Publication No. HEI 5-93909, but in the proposed configuration the work for fixing the electroluminescent light to a holder with a large mass is rather difficult, and noises can not fully be attenuated only by making a mass of a holder to which the electroluminescent light is fixed larger to make smaller acceleration in propagation of vibration.

### SUMMARY OF THE INVENTION

It is an object of the present invention to provide a light-emitting element in which noises are generated less as compared to that on the conventional technology.

It is another object of the present invention to provide a display unit with noises generated by a light-emitting element reduced.

It is still another object of the invention to provide a method of efficiently producing light-emitting elements each in which noises are generated less.

A light-emitting element according to the invention has a multilayered structure in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to the base film.

A light-emitting element according to the invention has the configuration in which a light-transmitting plastic sheet having a specified thickness is used as a base film and a transparent electrode is placed in close contact thereon to form a multilayered structure, and further a light-emitting body layer, a dielectric body layer, a rear-surface electrode, and an insulating layer are placed in succession on the transparent electrode to form an electroluminescent light.

A display unit according to the invention comprises a light-emitting element having a multilayered structure in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to the base film; a liquid crystal display element with the rear surface opposite to the light-transmitting plastic sheet of the light-emitting element; and a holder for holding a rear surface of this liquid crystal display element and the light-transmitting plastic sheet of the light-emitting element in close contact to each other.

A display unit according to the invention comprises a light-emitting element in which a light-transmitting plastic sheet having a specified thickness is used as a base film and a transparent electrode is placed in close contact thereon to form a multilayered structure, and further a light-emitting body layer, a dielectric body layer, a rear-surface electrode, and an insulating layer are placed in succession on the transparent electrode to form an electroluminescent light; a liquid crystal display element with the rear surface opposite to the light-transmitting plastic sheet of this light-emitting element; and a holder for holding a rear surface of this liquid crystal display element and the light-transmitting plastic sheet of the light-emitting element in close contact to each other.

A display unit according to the invention comprises a light-emitting element accommodated in a casing for a basic body of a portable telephone set and in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to the base film; a liquid crystal display element with the rear surface opposite to the light-transmitting plastic sheet of this light-emitting element; a holder attached to a printed board accommodated in the casing for a basic body of a portable telephone set and for holding a rear surface of the liquid crystal display element and the light-transmitting plastic sheet in opposition to each other; and a transparent display window provided on a surface of the casing for a basic body near a speaker of the portable telephone set at a position opposite to the liquid crystal display element.

A method of producing light-emitting elements according to the invention comprises the steps of: placing in piles a plurality of electroluminescent lights each formed by placing in piles a base film, a transparent electrode, a light-emitting body layer, a dielectric body layer, a rear-surface electrode, and an insulating layer in succession in this order in close contact to each other on a light-transmitting plastic sheet having a specified thickness; and cutting the light-transmitting plastic sheet to obtain a plurality of light-emitting elements each in which the base film of the electroluminescent light and the light-transmitting plastic sheet are placed in close contact to each other.

Other objects and features of this invention will become understood from the following description with reference to the accompanying drawings.

### BRIEF DESCRIPTION OF THE DRAWING

Figs. 1A to 1C are views showing the light-emitting element according to Embodiment 1 of the present invention;
Figs. 2A to 2C are views showing the light-emitting element according to Embodiment 2 of the present invention;
Figs. 3A to 3C are views showing the light-emitting element according to Embodiment 3 of the present invention;
Fig. 4 is a cross-sectional view showing the display unit according to Embodiment 4 of the present invention;
Fig. 5 is across-sectional view showing the display unit according to Embodiment 5 of the present invention;
Fig. 6 is a perspective view showing Embodiment 6 in which a display unit according to the present invention is applied to a portable telephone set.
Fig. 7 is a cross-sectional view showing a key section of the display unit according to Embodiment 6 of the present invention;
Figs. 8A and 8B are views showing a method of producing light-emitting elements according to Embodiment 7 of the present invention; and
Figs. 9A to 9C are views showing a method of producing light-emitting elements according to Embodiment 8 of the present invention.

### DESCRIPTION OF THE PREFERRED EMBODIMENT

Next description is made for Embodiment 1 of the present invention with reference to the related drawings.

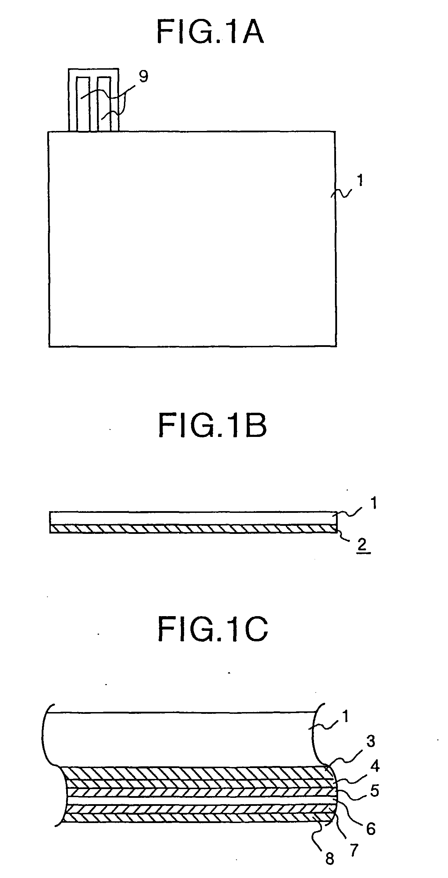

Figs. 1A to 1C are a flat view, a cross-sectional view, and an enlarged cross-sectional view each showing the light-emitting element according to Embodiment 1 of the present invention. In these figures, designated at the reference numeral 1 is a transparent plastic sheet made of transparent resin such as polyester, and has a specified thickness. The reference numeral 2 indicates a electroluminescent light (described as EL hereinafter) adhered with a double-sided tape to the transparent plastic sheet, which comprises, as shown in Fig. 1C, a base film 3, a transparent electrode 4, a light-emitting body layer 5, a dielectric body layer 6, a rear-surface electrode 7, and an insulating layer 8 laminated in this order by means of printing. The reference numeral 9 indicates a connection terminal for loading an AD voltage to the transparent electrode 4 and rear-source electrode 7 of the EL 2.

Namely, when an AD voltage is loaded through the connection terminal 9 to a section between the transparent electrode 4 and the rear-surface electrode 7 of the EL 2, hole electrons collide the light-emitting body layer 5 to generate light. A major cause for vibration of and generation of noises in the EL 2 is collision of hole electrons to the light-emitting body layer 5 at high-speed, and a frequency of the loaded AD voltage and a frequency components in a frequency band which is a positive integral number times higher than the frequency of the loaded AD voltage are relatively high, but vibrate in a wide range of frequency band. For this reason, although the EL 2 itself vibrates in a wide frequency band, in the light -emitting element according to Embodiment 1, the base film 3 of the EL 2 is closely adhered to the transparent plastic sheet 1 having a specified thickness, so that vibration of the EL 2 is prevented due to rigidity of the transparent plastic sheet 1, which suppresses generation of noises. Herein a thickness of the transparent plastic sheet 1 is required only to be sufficient for preventing the EL 2 from vibrating, but as a required thickness thereof varies according to such factors as a thickness of the EL 2, a AD voltage value, a frequency thereof, and others, so that an appropriate thickness may be selected according to a thickness of the EL 2 used in each application and the AD voltage value in the application on the condition that the selected thickness is enough for reducing noises. Further the transparent plastic sheet 1 has a specified thickness and is effective for attenuation of vibration energy.

Description of Embodiment 1 above assumes a case where the transparent plastic sheet 1 and EL 2 are adhered to each other with a double-sided tape, but the same effect can be achieved also by using the transparent plastic sheet 1 as a base film of the EL and placing the transparent electrode 4, light-emitting body layer 5, dielectric body layer 6, rear-surface electrode 7, and insulating layer 8 by means of printing or the like in close contact to each other on the transparent plastic sheet 1 to form a light-emitting element based on a multilayered structure.

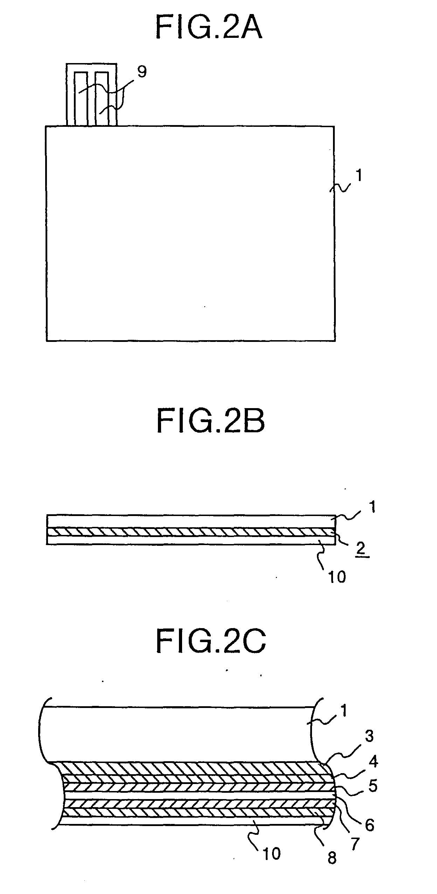

Figs. 2A to 2C are a flat view, a cross-sectional view, and enlarged cross-sectional view each showing a light-emitting element according to Embodiment 2 of the present invention.

In Embodiment 2, in addition to the configuration in Embodiment 1 described above, a buffering material 10 is laminated on the insulating layer 8. As the buffering material 10, for instance, unwoven cloth is used.

The buffering material 10 attenuates vibration propagated from the side of insulating layer 8, but generally as the light-emitting element as described above is held by a holder on the side of the insulating layer 8, so that the buffering material 10 can effectively attenuate vibration propagated via the holder from the insulating layer 8.

It is needless to say that, also in this Embodiment 2, the same effect can be achieved either by adhering the transparent plastic sheet 1 and EL 2 to each other with a double-sided tape, or by placing the transparent electrode 4, light-emitting body layer 5, dielectric body layer 6, rear-surface electrode 7, and insulating layer 8 in close contact to each other on the transparent plastic sheet 1.

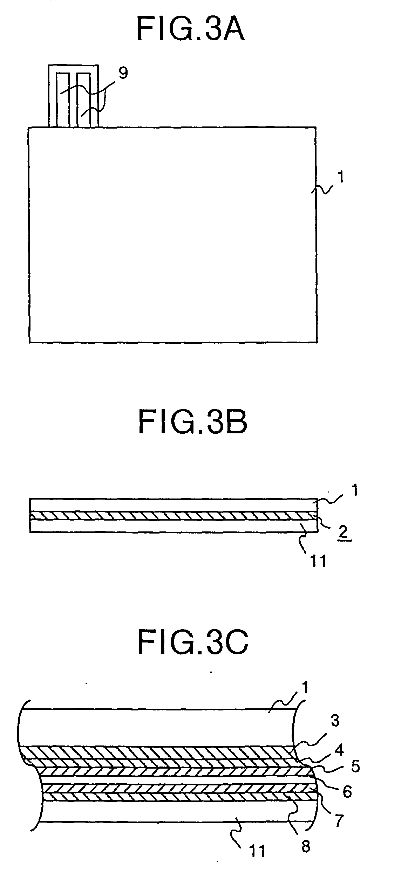

Figs.3A to 3C are a flat view, a cross-sectional view, and an enlarged cross-sectional view each showing a light-emitting element in Embodiment 3 of the present invention.

In Embodiment 3, in addition to the configuration in Embodiment 1, a transparent plastic sheet 11 is adhered on and in close contact to the insulating layer 8 to form a multilayered structure.

In this Embodiment 3, also vibration of the insulating layer 8 is restricted by the transparent plastic sheet 11, so that vibration can effectively be restricted because of synergetic effect with the transparent plastic sheet 1 in the side of base film 3, which in turn prevent generation of noises.

It should be noted that the transparent plastic sheet may not be transparent because light is not irradiated to the insulating layer side, and that this is also true in the embodiments described hereinafter.

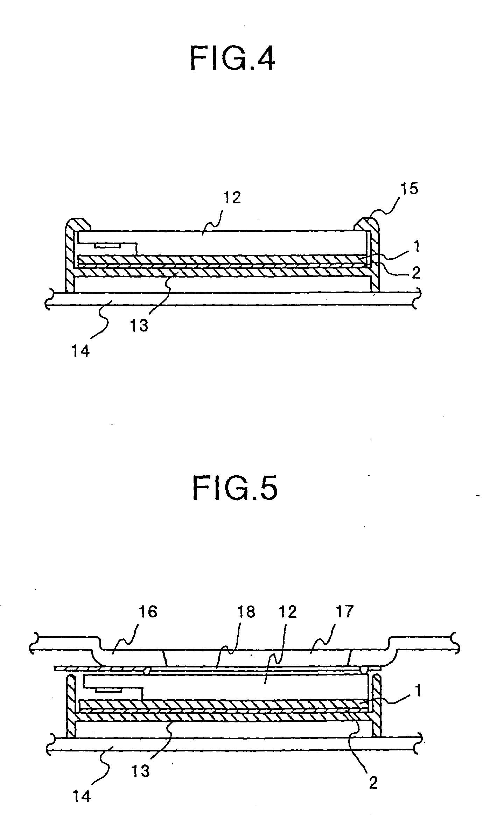

Fig. 4 is a cross-sectional view showing a display unit according to Embodiment 4 of the present invention. In this figure, designated at the reference numeral 1 is a transparent plastic sheet, at 2 an EL, at 12 a liquid crystal display element with the rear surface opposite to the transparent plastic sheet 1, at 13 a holder fixed to a printed board 14 with electronic components mounted thereon and holding the transparent plastic sheet 1, EL 2, and liquid crystal display element 12, and at 15 a claw section provided on this holder 13.

Namely, the transparent plastic sheet 1 and EL 2 constitute the light-emitting element according to Embodiment 1 shown in Figs. 1A to 1C, and the holder 13 holds the liquid crystal display element 12, transparent plastic sheet 1, and EL 2 with a claw section 15 to hold the liquid crystal display element 12 and transparent plastic sheet 1 in close contact to each other. As described above, by holding the liquid crystal display element 12 and transparent plastic sheet 1 in close contact to each other, vibration propagated via the transparent plastic sheet 1 is restricted by the liquid crystal display element closely contacted thereto. In addition, also the transparent plastic sheet 1 and EL 2 are pressed by the holder 13, so that the vibration can effectively be restricted by the transparent plastic 1.

It should be noted that, although the above description of Embodiment 4 assumed the light-emitting element according to Embodiment 1 of the present invention, the same effect can be achieved by using the light-emitting element according to Embodiment 2 or Embodiment 3.

Further, the light-emitting element is not limited to that described above, and it is allowable to use a light-emitting element formed by adhering a transparent plastic sheet having a specific thickness with a double-sided tape to the side of the insulating layer 8 of the EL 2 to form a multilayered structure, or a light-emitting element formed by using a transparent plastic sheet having a specified thickness as the insulating layer 8, placing a rear-surface electrode on and in close contact to the insulating layer 8, and further placing a dielectric body layer, a light-emitting body layer, a transparent electrode, and a base film in succession in this order on the rear-surface electrode to form an EL. Further the light-emitting element may be formed by simply holding the EL 2 and liquid crystal display element 12 in close contact to each other with the holder 13 in place of using the transparent plastic sheet 1. In brief, a desired effect can be obtained by holding the EL 2 in close contact to the liquid crystal display element 12 with the holder 13 to restrict vibration thereof.

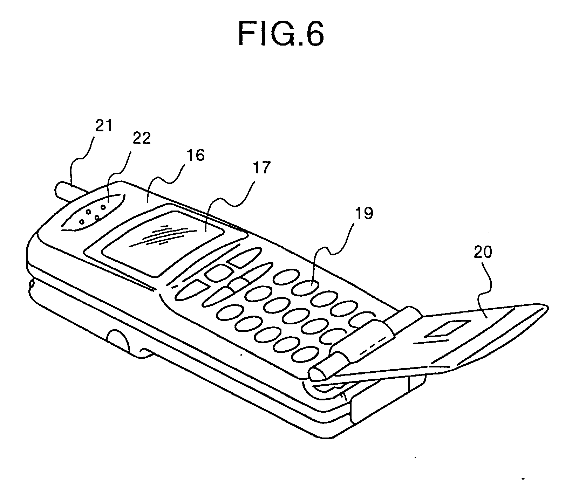

Fig. 5 is a cross-sectional view showing a display unit according to Embodiment 5 of the present invention.

In this figure, the same reference numerals are assigned to components corresponding to those in Fig. 4, and the reference numerals 1 and 2 indicate a transparent plastic sheet and an EL each constituting a light-emitting element according to the light-emitting element according to Embodiment 1. In this figure, designated at the reference numeral 16 is a casing for an electronic device such as a portable telephone set, at 17 a display window formed in a portion of this casing, and at 18 a rubber sheet inserted between the casing 16 and the liquid crystal display element 12, and a convex section contacting a peripheral section of a surface of the liquid crystal display element 12 elastically presses the liquid crystal display element to contact the liquid crystal display element 12 closely to the transparent plastic sheet 1. The rubber sheet 18 has a ring-shaped form adapted to a form of a peripheral section of the liquid crystal display element 12, and a display on the liquid crystal display element 12 can visually be checked via a hollow section from the display window 17.

Namely in Embodiment 4 described above, the transparent plastic sheet 1 and EL 2 are closely contacted to each other by the holder 13, but in this Embodiment 5 the liquid crystal display element 12, transparent plastic 1, and EL 2 are held between the rubber sheet 18 pressed by a bottom surface of the casing 16 and holder 13 to closely contact the liquid crystal display element 12 and transparent plastic sheet 1 to each other. For this reason, with this Embodiment 5, vibration of the EL 2 propagated via the transparent plastic sheet 1 is restricted by the liquid crystal display element 12 closely contacting thereto like in Embodiment 4, and also the vibration can effectively be restricted by the transparent plastic sheet 1. Further the EL 2 is elastically hold by the rubber sheet 18, so that also the vibration propagated to the casing 16 is restricted by the rubber sheet 18.

It should be noted that, also in Embodiment 5, various types of light-emitting element may be used like in Embodiment 4.

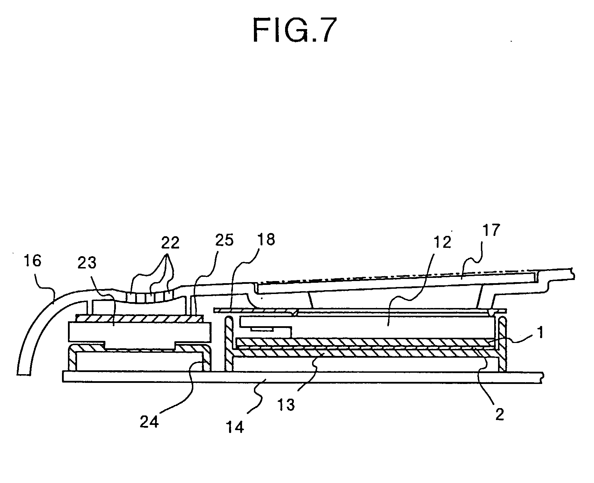

Fig. 6 is a perspective view showing Embodiment 6 in which the display unit according to Embodiment above is applied to a portable telephone set, and Fig. 7 is a cross-sectional view showing a key section thereof.

In the figure, designated at the reference numeral 19 are push buttons consisting of numerical keys and function keys provided on the casing 16, at 20 a flip with a microphone incorporated therein, at 21 an antenna, at 22 a sound hole section provided on the casing 16, at 23 a speaker provided at a position opposite to a position where the sound hole section 22 is provided, at 24 a speaker holder fixed to the printed board 14 and holding the speaker 23 at a specified position, at 25 a cushion for a speaker provided between the casing 16 and speaker 23 and holding the speaker 23 by elastically pressing the peripheral section thereof.

As clearly understood from Fig. 7, the display unit according to Embodiment 6 of the present invention can restrict and reduce vibration generated by the EL 2 like in Embodiment 5. In a telephone set, as a liquid crystal display section and a speaker section are provided in vicinity to each other, noises generated in association with signals generated by the EL 2 are propagated via the casing 16 or sound hole section 22 even to the talker, which impedes smooth communications, but in Embodiment 5, as vibration of the EL 2 is effectively restricted, communications is not disturbed. For this reason, when applied in a portable telephone set, the display unit according to Embodiment 5 is very advantageous.

Description of Embodiment 6 assumed a case where the display unit according to Embodiment 5 was applied to a portable telephone set, but it is needless to say that the same effect can be achieved also by applying the display unit according to Embodiment 4 to a portable telephone set. Even in a case where a display unit according to any of the embodiments described above is applied to a portable telephone set, various types of light-emitting element may be used as described in relation to Embodiment 4 and Embodiment 5.

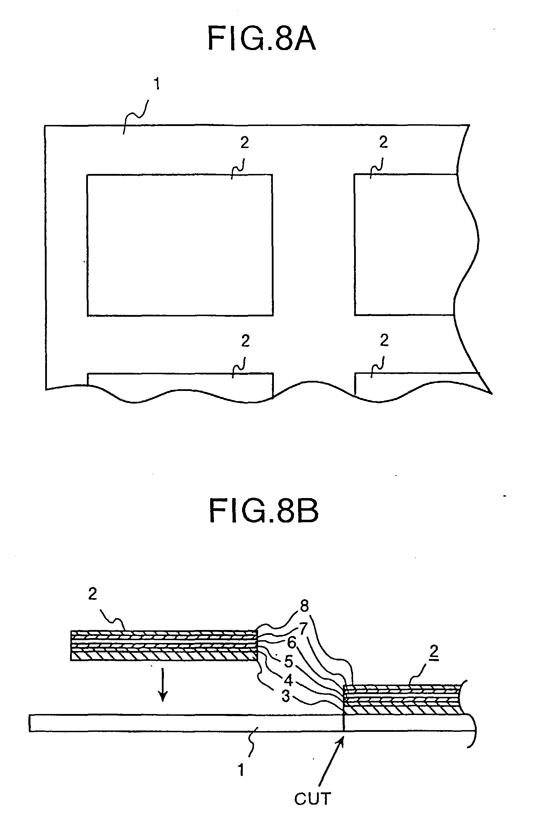

Figs. 8A and 8B are views each showing a method of producing light-emitting elements according to Embodiment 7 of the present invention, and Fig. 8A is a flat view, while Fig. 8B is a front cross-sectional view.

Namely, in the method of producing light-emitting elements according to Embodiment 7, at first a plurality of EL 2 each formed by laminating the base film 3, transparent electrode 4, light-emitting body layer 5, dielectric body layer 6, rear-surface electrode 7, and insulating layer 8 with a double-sided tape on the transparent plastic sheet 1 are arrayed. Each of the plurality of EL 2 is previously formed into, for instance, a square form like that of the element as shown in the figure. Then a plurality of light-emitting elements according to Embodiment 1 can be obtained by cutting the transparent plastic sheet 1 along the form of EL 2 as shown in Fig. 8B.

It should be noted that, although the above description assumed a case where only the EL 2 is placed on and in close contact to the transparent plastic sheet 1, a light-emitting element having a buffering material layer may be obtained by further including a step of laminating a buffering material layer on the insulating layer 8 of the EL 2.

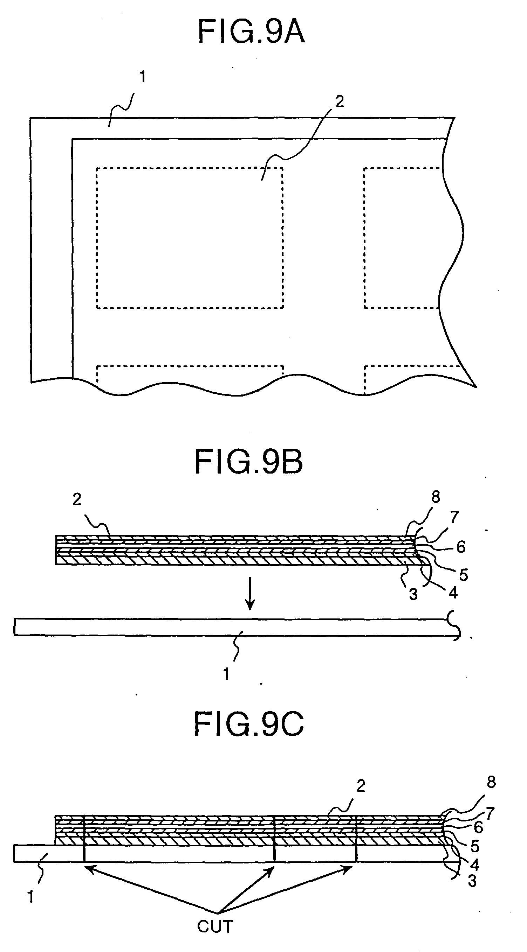

Figs. 9A to 9C are views each showing a method of producing light-emitting elements according to Embodiment 8 of the present invention, and Fig. 9A is a flat view, while Fig. 9B and Fig. 9C are front cross-sectional views.

Namely, in the method of producing light-emitting elements according to Embodiment 7 , a plurality of EL 2 each formed into a shape like an element are arrayed on the transparent plastic sheet 1, but in this Embodiment 8, the EL 2 is adhered to the substantially entire surface of the transparent plastic sheet 1 with a double-sided tape. Then, the EL 2 and transparent plastic sheet 1 are cut along the element form as shown in Fig. 9C to obtain a plurality of light-emitting elements.

It should be noted that, although a plurality of EL 2 each comprising the base film 3, transparent electrode 4, light-emitting body layer 5, dielectric body layer 6, rear-surface electrode 7, and insulating layer 8 laminated in succession in this order on the transparent plastic sheet 1 are placed in close contact to each other, a light-emitting element including the transparent plastic sheet 1 having a specified thickness as a base film can be obtained by using the transparent plastic sheet as a base film, laminating the transparent electrode 4, light-emitting body layer 5, dielectric body layer 6, rear-surface electrode 7, and insulating layer 8 in succession in this order on the transparent plastic sheet 1, and then cutting the multilayered structure.

Although the above description assumed a case where the transparent plastic sheet was placed only on and in close contact to the base film 3 of the EL 2, another type of light-emitting element may be obtained by placing the transparent plastic sheet 1 also on and in close contact to the insulating layer 8.

Further a light-emitting element having a buffering material layer may be obtained by further adding a step of laminating a buffering material layer on the insulating layer 8 of the EL 2.

In the light-emitting element according to the present invention, a transparent light-transmitting plastic sheet having a specified thickness is closely contacted to an EL to form a multilayered structure, so that vibration of the EL can be restricted because of rigidity of the light-transmitting plastic sheet, which in turn enables suppression of noises. Further, as a generation of noises can be suppressed with a single body of light-emitting element, attachment of the light-emitting element to a holder or the like can advantageously be simplified.

In the display unit according to the present invenrion, an EL and a liquid crystal display element are held in close contact to each other by a holder, so that vibration of the EL can be restricted, which advantageously suppresses generation of noises.

In the display unit according to the present invention, an EL and a liquid crystal display element is held in close contact to each other via an elastic body provided therebetween, so that vibration of the EL can be restricted, which advantageously suppressed generation of noises.

The display unit according to the present invention is a display unit for a portable telephone set, in which an EL and a liquid crystal display element are held in close contact to each other with a holder, so that vibration of the EL can be restricted and also generation of noises can be suppressed, and for this reason there is provided the advantage that smooth communications is not disturbed.

In the method of producing light-emitting elements according to the present invention, a plurality of EL corresponding to a plurality of light-emitting elements are laminated on one sheet of light-transmitting plastic sheet, and a plurality of light-emitting elements are obtained by cutting the light-transmitting plastic sheet, so that light-emitting elements can efficiently be manufactured.

This application is based on Japanese patent application No. HEI 8-347796 filed in the Japanese Patent Office on December 26, 1996, the entire contents of which are hereby incorporated by reference.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A light-emitting element having a multilayered structure in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to said base film.

2. A light-emitting element in which a light-transmitting plastic sheet having a specified thickness is used as a base film and a transparent electrode is placed in close contact thereon to form a multilayered structure, and further a light-emitting body layer, a dielectric body layer, a rear-surface electrode, and an insulating layer are placed in succession on said transparent electrode to form an electroluminescent light.

3. A light-emitting element having a multilayered form in which a base film, a transparent electrode, a light-emitting body layer, a dielectric body layer, a rear-surface electrode, and an insulating layer are successively placed in piles in this order to form an electroluminescent light; a light-transmitting plastic sheet having a specified thickness is placed on and in close contact to said base film; and further a plastic sheet having a specified thickness is placed in close contact on said insulating layer to form a multilayered structure.

4. A display unit comprising a light-emitting element having a multilayered structure in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to said base film; a liquid crystal display element with the rear surface opposite to the light-transmitting plastic sheet of said light-emitting element; and a holder for holding a rear surface of this liquid crystal display element and the light-transmitting plastic sheet of said light-emitting element in close contact to each other.

5. A display unit comprising a light-emitting element in which a light-transmitting plastic sheet having a specified thickness is used as a base film and a transparent electrode is placed in close contact thereon to form a multilayered structure, and further a light-emitting body layer, a dielectric body layer, a rear-surface electrode, and an insulating layer are placed in succession on said transparent electrode to form an electroluminescent light; a liquid crystal display element with the rear surface opposite to the light-transmitting plastic sheet of this light-emitting element; and a holder for holding a rear surface of this liquid crystal display element and the light-transmitting plastic sheet of said light-emitting element in close contact to each other.

6. A display unit comprising a light-emitting element having a multilayered form in which a base film, a transparent electrode, a light-emitting body layer, a dielectric body layer, a rear-surface electrode, and an insulating layer are successively placed in piles in this order to form an electroluminescent light, a light-transmitting plastic sheet having a specified thickness is placed on and in close contact to said base film, and further a plastic sheet having a specified thickness is placed in close contact on said insulating layer to form a multilayered structure; a liquid crystal display element with the rear surface opposite to the light-transmitting plastic sheet laminated on the base film of this light-emitting element; and a holder for holding the opposite-proviced liquid crystal display element and the light-transmitting plastic sheet in close contact to each other.

7. A display unit comprising a light-emitting element consisting of an electroluminescent light in which a base film, a transparent electrode, a light-emitting body layer, a dielectric body layer, a rear-surface electrode, and an insulating layer are successively placed in piles in this order; a liquid crystal display element with the rear surface opposite to the base film of this light-emitting element; and a holder for holding a rear surface of this liquid crystal display element and insulating layer of said light-emitting element in close contact to each other.

8. A display unit comprising a light-emitting element having a multilayered structure in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and close contact to said base film; a liquid crystal display element with the rear surface opposite to the light-transmitting plastic sheet of this light-emitting element; a holder for holding a rear surface of this liquid crystal display element and the light-transmitting plastic sheet of said light-emitting element in opposition to each other; a holding unit for pressing a peripheral section of a surface of said liquid crystal display element via an elastic body and also for holding a rear surface of this liquid crystal display element and the light-transmitting plastic sheet of said light-emitting element in close contact to each other.

9. A display unit comprising a light-emitting element in which a light-transmitting plastic sheet having a specific thickness is used as a base film, a transparent electrode is placed on and in close contact to the base film to form a multilayered structure, and a light-emitting body layer, an dielectric body layer, an rear-surface electrode, and an insulating layer are placed in piles in succession in this order on said transparent electrode to form an electroluminescent light; a liquid crystal display element with the rear surface opposite to the light-transmitting plastic sheet of this light-emitting element; a holder for holding a rear surface of this liquid crystal display element and the light-transmitting plastic sheet of said light-emitting element in opposition t to each other; and a holding unit for pressing a peripheral section of a surface of said liquid crystal display element via an elastic body and also for holding a rear surface of said liquid crystal display element and the light-transmitting plastic sheet of said light-emitting element in close contact to each other.

10. A display unit comprising a light-emitting element consisting of an electroluminescent light in which a base film, a transparent electrode, a light-emitting body layer, a dielectric body layer, a rear-surface electrode, and an insulating layer are successively placed in piles in this order to form a multilayered structure; a liquid crystal display element with the rear surface opposite to the base film of this light-emitting element; a holder for holding a rear surface of this liquid crystal display element and the base film of said light-emitting element in opposition to each other; and a holding unit for pressing a peripheral section of a surface of said liquid crystal display element via an elastic body and also for holding a rear surface of this liquid crystal display element and the base film of said light-emitting element in close contact to each other.

11. A display unit comprising a light-emitting element accommodated in a casing for a basic body of a portable telephone set and in which a base film, a transparent electrode, a light-emitting body layer, a dielectric body layer, a rear-surface electrode, and an insulating layer are successively placed in piles in this order to form an electroluminescent light and a light-transmitting plastic sheet having a specified thickness is placed on and in close contact to said base film; a liquid crystal display element with the rear surface opposite to the light-transmitting plastic sheet of this light-emitting element; a holder attached to a printed board accommodated in said casing for a basic body of a portable telephone set and for holding a rear surface of said liquid crystal display element and the light-transmitting plastic sheet in opposition to each other; and a transparent display window provided on a surface of said casing for a basic body near a speaker of said portable telephone set at a position opposite to said liquid crystal display element.

12. A display unit comprising a light-emitting element accommodated in a casing for a basic body of a portable telephone set and in which a light-transmitting plastic sheet having a specified thickness is used as a base film, and a transparent electrode is placed on and in close contact on the base film to form a multilayered structure, and further a light-emitting body layer, a dielectric body layer, a rear-surface electrode, and an insulating layer are placed in piles in succession in this order on said transparent electrode to form an electroluminescent light; a liquid crystal display element with the rear surface opposite to the light-transmitting plastic sheet of this light-emitting element; a holder attached to a printed board accommodated in said casing for a basic body of a portable telephone set and for holding a rear surface of said liquid crystal display element and the light-transmitting plastic sheet in opposition to each other; and a transparent display window provided on a surface of said casing near a speaker of said portable telephone set at a position opposite to said liquid crystal display element.

13. A display unit comprising a light-emitting element accommodated in a casing for a basic body of a portable telephone set and in which a base film, a transparent electrode, a light-emitting body layer, a dielectric body layer, a rear-surface electrode, and an insulating layer are placed in piles in succession in this order to form an electroluminescent light and a light-transmitting plastic sheet having a specified thickness is placed on and in close contact to said base film with a plastic sheet having a specified thickness placed on and in close contact to said insulating layer to form a multilayered structure; a liquid crystal display element with the rear surface opposite to the light-transmitting plastic sheet laminated on the base film of this light-emitting element; a holder attached on a printed board accommodated in said casing for a basic body of a portable telephone set and for holding the rear surface of said liquid crystal display element and the light-transmitting plastic sheet in opposition to each other; and a transparent display window provided on a surface of said casing near a speaker of said portable telephone set at a position opposite to said liquid crystal display element.

14. A display unit comprising a light-emitting element accommodated in a casing for a basic body of a portable telephone set and in which a base film, a transparent electrode, a light-emitting body layer, a dielectric body layer, a rear-surface electrode, and an insulating layer are placed in piles in succession in this order to form an electroluminescent light; a liquid crystal display element with the rear surface opposite to the base film of this light-emitting element; a holder attached on a printed board accommodated in said casing for a basic body of a portable telephone set and for holding a rear surface of said liquid crystal display element and the base film of said light-emitting element in opposition to each other; and a transparent display window provided on a surface of said casing near a speaker of said portable telephone set at a position opposite to said liquid crystal display element.

15. A method of producing light-emitting elements comprising the steps of: placing in piles a plurality of electroluminescent lights each formed by placing in piles a base film, a transparent electrode, a light-emitting body layer, a dielectric body layer, a rear-surface electrode, and an insulating layer in succession in this order in close contact to each other on a light-transmitting plastic sheet having a specified thickness; and cutting said light-transmitting plastic sheet to obtain a plurality of light-emitting elements each in which the base film of said electroluminescent light and the light-transmitting plastic sheet are placed in close contact to each other.
